# EUROPÄISCHE PATENTSCHRIFT

(11) **EP 0 830 273 B1**
(45) Veröffentlichungstag und Bekanntmachung des Hinweises auf die Patenterteilung: **10.10.2001**
(21) Anmeldenummer: 96919607.0
(22) Anmeldetag: 30.05.1996
(51) Int. Cl.: B60R 25/04

(54) **WEGFAHRSPERRE**
DRIVE-AWAY BLOCKING DEVICE
DISPOSITIF ANTIVOL

(30) Priorität: 03.06.1995 DE 19520505
(43) Veröffentlichungstag der Anmeldung: 25.03.1998
(73) Patentinhaber: ROBERT BOSCH GMBH, 70442 Stuttgart (DE)
(72) Erfinder: DENZ, Helmut, D-70176 Stuttgart (DE); WICHTERICH, Johannes-Dieter, D-75417 Muehlacker (DE); WALTER, Klaus, D-74321 Bietigheim-Bissingen (DE); KOHLER, Frank, D-77855 Achern (DE); BURGER, Wilfried, D-71282 Hemmingen (DE); DIEBOLD, Bernd, D-77866 Rheinau (DE)
(86) Internationale Anmeldenummer: DE9600942
(87) Internationale Veröffentlichungsnummer: WO9639317

(56) Entgegenhaltungen:
- EP-A- 0 354 102
- EP-A- 0 372 741
- EP-A- 0 373 076
- EP-A- 0 600 243
- EP-A- 0 637 527
- EP-A- 0 642 959
- WO-A-94/08823
- DE-A- 4 333 474
- DE-A- 4 338 033
- DE-A- 4 412 214
- DE-A- 4 414 644
- DE-U- 9 308 721

## Beschreibung

### Stand der Technik

Die Erfindung betrifft eine Wegfahrsperre mit einem Motorsteuergerät. Eine solche ist bekannt beispielsweise aus der EP-OS 642 959. Die daraus entnehmbare Anordnung umfaßt unter anderem einen Immobilizer, welcher über eine Datenleitung mit einem Motorsteuergerät in Verbindung steht. Dessen Betrieb gibt der Immobilizer nur frei, wenn ihm seinerseits zuvor bestimmte Codesignale zugeführt wurden, und diese mit einem gespeicherten Referenzcode übereinstimmen. Voraussetzung für den Betrieb des Fahrzeuges ist demnach die Kenntnis des dem Immobilizer einzugebenden Referenzcodes. Eine unberechtigte Inbetriebnahme des Fahrzeuges ist somit erheblich erschwert. Bei entsprechendem Aufwand ist sie gleichwohl möglich, insbesondere durch Ersetzen des Immobilizers durch ein entsprechendes, nicht gesichertes Gerät. Um eine solche Möglichkeit ebenfalls auszuschließen, wurde in der deutschen Patentanmeldung DE-P 44 14 644.2 vorgeschlagen, die Inbetriebnahme zusätzlich von einem Freigabedatenaustausch zwischen dem Immobilizer und dem Motorsteuergerät abhängig zu machen. Dabei sendet eines der beteiligten Geräte dem jeweils anderen einen Grundcode, welchen jenes umcodiert und zurücksendet. Zeitgleich generiert das sendende Gerät in gleicher Weise wie das empfangene Gerät aus dem Grundcode einen umcodierten Code. Eine Freigabe erfolgt, wenn der von dem empfangenden Gerät zurückerhaltene umcodierte Code mit dem vom sendenden Gerät erzeugten übereinstimmt. Bei dieser Anordnung ist eine unberechtigte Inbetriebnahme auch dann nicht möglich, wenn eines der beteiligten Geräte durch ein nicht gesichertes Gerät ausgetauscht wird. Allerdings ist auch die berechtigte Handhabung dieser Anordnung erschwert, beispielsweise wenn eines der beteiligten Geräte defekt ist und ausgetauscht werden soll. Dabei ist jeweils zunächst die verwendete Umcodierregel zu ermitteln, was je nach Systemausgestaltung einigen Aufwand erfordern kann.

Aus der EP-A 637 527 ist ein Diebstahlschutzsystem bekannt. Über einen Sender und eine Diebstahlschutzeinrichtung gelangt ein Benutzercode an eine Steuereinrichtung. Die Steuereinrichtung veranlasst eine zweimalige Zusendung des Benutzercodes. In der Steuereinrichtung ist ein Speicher vorgesehen, in dem im Normalfall der Benutzercode als Referenzcode abgelegt ist. Ist die Steuereinrichtung neu, so wird der empfangene Code als Benutzerreferenzcode in den Speicher eingeschrieben.

Aufgabe der Erfindung ist es deshalb, eine Wegfahrsperre anzugeben, welche nicht durch Austausch eines der einbezogenen Geräte umgehbar ist, und die dabei eine einfache Handhabung ermöglicht.

Diese Aufgabe wird gelöst durch eine Wegfahrsperre mit den Merkmalen des Hauptanspruchs. In dem das Motorsteuergerät nur betriebsbereit ist, wenn es vom Sicherungsschutzgerät ein Referenzsignal erhalten hat, das erfindungsgemäß zuvor vom Sicherungsschutzgerät festgelegt wurde, ist eine Inbetriebnahme des zugehörigen Fahrzeuges nicht möglich, wenn entweder das Motorsteuergerät oder das Sicherungssteuergerät ausgetauscht wurden. Hingegen ist es für einen Berechtigten vergleichsweise leicht, ein beteiligtes Gerät bei Bedarf zu ersetzen, da grundsätzlich beliebige Geräte einander anpaßbar sind. Als weiteren Vorteil gestattet die erfindungsgemäße Wegfahrsperre einen sofortigen Testbetrieb der einzelnen Komponenten unmittelbar nach der Herstellung. In einer vorteilhaften Ausgestaltung der erfindungsgemäßen Wegfahrsperre besteht die Möglichkeit einer Notentriegelung des Motorsteuergerätes durch eine vom Benutzer vorzunehmende Direkteingabe in das Motorsteuergerät.

Nachfolgend wird eine Ausführung der erfindungsgemäßen Wegfahrsperre unter Bezugnahme auf die Zeichnung näher erläutert.

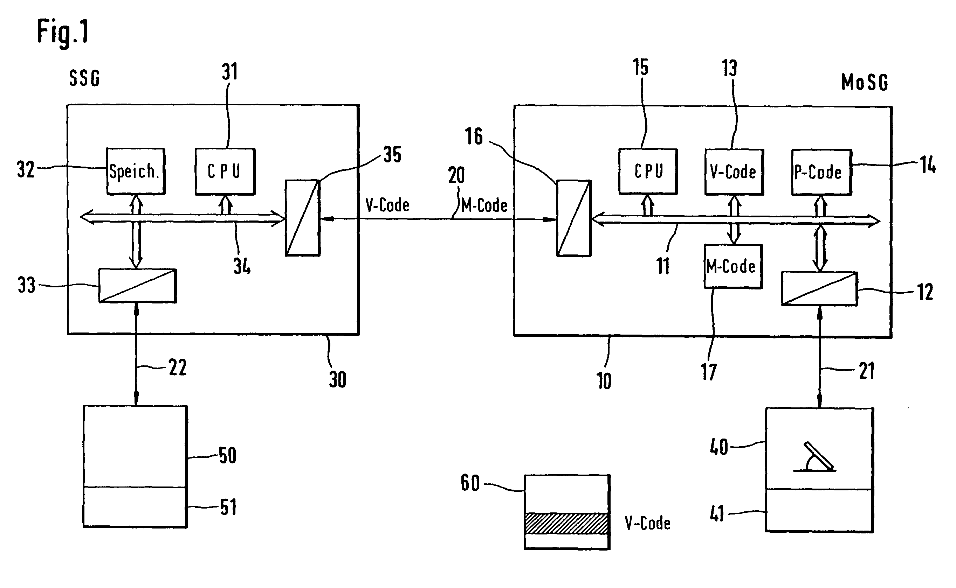

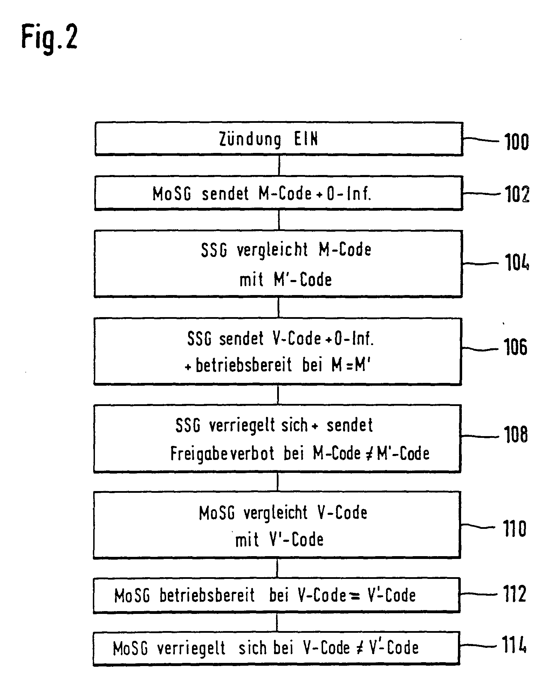

Es zeigen Figur 1 ein Strukturschaubild einer vorgeschlagenen Wegfahrsperre, Figuren 2 bis 4 Flußdiagramme zur Veranschaulichung der Arbeitsweise der Wegfahrsperre.

### Beschreibung

Figur 1 zeigt ein Motorsteuergerät 10, das über eine Signalleitung 20 mit einem Sicherungssteuergerät 30 verbunden ist. Intern umfaßt es eine zentrale Steuereinheit 15, welche über einen Datenbus 11 mit ersten, zweiten und dritten Speichermitteln 13, 14, 17 sowie mit einer Schnittstelle 16 zur Signalleitung 20 hin verbunden ist. Von den Speichermitteln dienen die ersten, 13, zur Aufnahme eines hier als V-Code bezeichneten Freigabecodes, der spezifisch ist für das jeweilige Fahrzeug, die zweiten 14 zur Aufnahme eines benutzerspezifischen P-Codes, der vom rechtmäßigen Benutzer festgelegt wurde, und die dritten, 17, zur Aufnahme eines M-Codes, der modellspezifisch für die Komponenten einer Wegfahrsperre ist, und der hauptsächlich als Rufsignal dient. Der Datenbus 11 weist weiterhin eine zweite Schnittstelle 12 auf, an die über eine weitere Signalleitung 21 eine Eingabeeinrichtung 40 anschließbar ist. Vorteilhaft ist das Motorsteuergerät 10 unter Verwendung eines Mikroprozessors oder vergleichbarer digitale Signale verarbeitender Bauelemente realisiert, welche programmgesteuert betrieben werden. Besonders zweckmäßig ist sie als Teil einer in den meisten gegenwärtigen Fahrzeugen ohnehin vorhandenen Motorsteuerelektronik ausgeführt.

Das Sicherungssteuergerät 30 baut sich intern aus einer intelligenten zentralen Prozessoreinheit 31 auf, welche über einen Datenbus 34 mit Speichermitteln 32, einer Schnittstelle 35 zur Datenleitung 20, sowie mit einer externen Schnittstelle 33 verbunden ist. An letztere ist über eine Leitungsverbindung 22 ein externes Gerät 50 anschließbar. Wie das Motorsteuergerät 10 ist auch das Sicherungssteuergerät 30 zweckmäßig unter Verwendung einer digitale Signale programmgesteuert verarbeitenden Einrichtung, wie insbesondere einem Mikroprozessor und üblicher Bauelemente aus dieser Peripherie aufgebaut.

Weiterer Bestandteil der Wegfahrsperre kann ein externes Speichermedium 60 sein, worin vor allem der V-Code, vorzugsweise in codierter Form, zusätzlich vorhandsen ist. Als Speichermedium bietet sich beispielsweise eine magnetisch codierte Chipkarte an, zu deren Auslesen den Eingabemitteln 40 sowie dem externen Gerät 50 jeweils ein Kartenleser 41 bzw. 51 zugeordnet ist. Indem sie weiterhin einen Zugangsberechtigungscode trägt, welcher den Eingabemitteln 40 bei jeder Inbetriebnahme zuzuführen ist, dient eine solche Chipkarte vorteilhaft zur standardmäßigen Legitimierung eines Benutzers.

Sowohl das Motorsteuergerät 10 als auch das Sicherungssteuergerät 30 können über weitere Funktionalitäten verfügen, die jedoch für die vorliegende Erfindung nicht von Bedeutung und aus Gründen der Übersichtlichkeit deshalb nicht dargestellt sind. Die in Figur 1 dargestellte Struktur wurde im übrigen nur im Hinblick auf eine einfache Beschreibung gewählt. Die vorgeschlagene Wegfahrsperre soll keineswegs auf die in der Zeichnung dargestellte Realisierung beschränkt sein.

Nachfolgend wird der Betrieb der in Figur 1 wiedergegebenen Wegfahrsperre anhand der Figuren 2 bis 4 erläutert. Figur 2 veranschaulicht den Normalbetrieb. Für die Inbetriebnahme des Fahrzeuges wird, in der Regel nachdem dem Motorsteuergerät 10 über die Eingabemittel 40 zuvor ein den Benutzer legitimierender Zugangsberechtigungscode zugeführt wurde, zunächst die Bordspannung eingeschaltet, Schritt 100, im allgemeinen in bekannter Weise durch Drehen eines Zündschlüssels. Nach Einschalten des Bordspannungsnetzes fordert das Motorsteuergerät 10 über die Datenleitung 20 vom Sicherungssteuergerät 30 einen Freigabecode an. Hierzu sendet das Motorsteuergerät 10 dem Sicherungssteuergerät 30 zunächst ein verschlüsseltes Rufsignal, Schritt 102. Dabei handelt es sich um einen hier als M-Code bezeichneten Code, der in den dritten Speichermitteln 17 des Motorsteuergerätes 10 permanent vorhanden ist. Entsprechend seiner wesentlichen Funktion als Rufsignal muß der M-Code nur weniger hohen Sicherungsanforderungen genügen. Er ist sinnvoll so beschaffen, daß er nicht in einfacher Weise mit Ersatzmitteln erzeugt werden kann. Zweckmäßig wird ein einheitlicher M-Code für alle Motorsteuergeräte - sowie für alle Sicherungssteuergeräte - einer Wegfahrsperrenbaureihe verwendet, so daß diese bezüglich des M-Codes gegeneinander austauschbar sind.

Zusammen mit dem M-Code überträgt das Motorsteuergerät 10 dem Sicherungssteuergerät 30 eine Modusinformation. Im Normalbetrieb, nachdem das Fahrzeug vorher bereits mindestens einmal regulär in Betrieb genommen wurde, ist diese Modusinformation ein hier als O-Information bezeichnetes Signal. Aus ihm erkennt das Sicherungssteuergerät 30, daß in den ersten Speichermitteln 14 des Motorsteuergerätes 10 ein Referenzcode vorhanden, beziehungsweise daß in die ersten Speichermittel 13 ein neuer Referenzcode einschreibbar ist.

Bei Erhalt des M-Codes vom Motorsteuergerät 10 registriert das Sicherungssteuergerät 30 zunächst jeweils die mitübertragene Modusinformation. Handelt es sich um eine den Normalbetrieb bezeichnende O-Information, überprüft das Sicherungssteuergerät 30, ob der erhaltene M-Code mit einem in seinen Speichermitteln 32 vorhandenen Referenz-M-Code übereinstimmt, Schritt 104. Ergibt sich dabei eine Nichtübereinstimmung zwischen dem erhaltenen M-Code und dem im Sicherungssteuergerät 30 vorhandenen Referenz-M-Code, bleibt das Sicherungssteuergerät 30 verriegelt, Schritt 108. Motorsteuergerät 10 und Sicherungssteuergerät 30 sind in diesem Fall nicht zusammen verwendbar. Eine Fahrzeuginbetriebnahme ist nicht möglich. Liegt im Regelfall hingegen eine Übereinstimmung von M-Code und Referenz-M-Code vor, sendet das Sicherungssteuergerät 30 dem Motorsteuergerät 10 in Reaktion auf den erhaltenen M-Code über die Datenleitung 20 als Antwortsignal ein hier als V-Code bezeichnetes Freigabesignal, das verschlüsselt übertragen wird, Schritt 106. Dieses Freigabesignal in Form eines V-Codes realisiert wesentlich die Sicherungswirkung der vorgeschlagenen Wegfahrsperre. Der V-Code ist deshalb fahrzeugspezifisch und von außen nicht ohne weiteres zugänglich, auch nicht für autorisierte Benutzer. Er ist als permanent vorhandene, nicht löschbare Information in den Speichermitteln 32 abgelegt. Zusätzlich kann er noch in einem externen Speichermedium 60 hinterlegt sein.

Den erhaltenen V-Code vergleicht jetzt das Motorsteuergerät 10 mit dem Inhalt der ersten Speichermittel 13, Schritt 110. Darin befindet sich, sofern das Fahrzeug vorher bereits wenigstens einmal regulär in Betrieb gesetzt und weiterhin an der Wegfahrsperre 10, 20, 30 keine Manipulationen vorgenommen wurden, ein Referenzcode. Reguläre Vorinbetriebnahme vorausgesetzt, ist der Referenzcode gleichfalls ein V-Code. Er wurde bei der ersten regulären Inbetriebnahme durch das Sicherungssteuergerät 30 vorgegeben. Im Falle einer autorisierten Inbetriebnahme stellt das Motorsteuergerät 10 Übereinstimmung des erhaltenen V-Codes mit dem in den Speichermitteln 13 vorhandenen Referenzcode fest und setzt sich betriebsbereit, Schritt 112. Ergibt der Vergleich von V-Code und Referenzcode andererseits eine Nichtübereinstimmung, bleibt das Motorsteuergerät 10 verriegelt, Schritt 114. Eine Inbetriebnahme des Fahrzeuges ist wiederum nicht möglich. Der letztgenannte Fall tritt insbesondere auf, wenn eines der Steuergeräte 10, 30 durch ein baugleiches Gerät ersetzt wurde. Zwangsläufig stimmt dann der im Ersatzgerät vorhandene V-Code nicht mehr mit dem im ursprünglichen Gerät vorhandenen überein, da im nicht ausgetauschten Gerät jeweils der V-Code des ersetzten Partnergerätes vorhanden ist.

Für den Ablauf, wie er in Figur 2 veranschaulicht ist, wurde vorausgesetzt, daß das Fahrzeug bereits wenigstens einmal regulär in Betrieb genommen wurde. Unter dieser Voraussetzung befindet sich in den ersten Speichermitteln 13 stets ein V-Code als Referenzcode. Wird ein Motorsteuergerät 10 hingegen erstmals in Betrieb genommen, ist in den Speichermitteln 13 ein Referenzcode noch nicht vorhanden. Diese Situation kann insbesondere bei fabrikneuen Fahrzeugen auftreten. Die Erstinbetriebnahme eines Motorsteugerätes in einem solchen Fall erfolgt zunächst entsprechend den Schritten 100 bis 108, wie sie in Figur 2 wiedergegeben sind. Beim Vergleich des erhaltenen V-Codes mit dem Inhalt der ersten Speichermittel 13, Schritt 110, stellt das Motorsteuergerät 10 jedoch fest, daß in den Speichermitteln 13 kein Referenzcode vorhanden ist. Das Motorsteuergerät 10 überprüft dann, ob zusammen mit dem V-Code eine weitere Information zur Steuerung des Betriebes des Motorsteuergerätes 10 übertragen wurde. Trifft dies nicht zu, übernimmt es den vom Sicherungssteuergerät 30 übermittelten V-Code als Referenzcode für alle nachfolgenden Inbetriebnahmen in die ersten Speichermittel 13.

Für fabrikneue Motorsteuergeräte 10, in deren Speichermitteln 13 noch kein V-Code vorhanden ist, ist zweckmäßig eine gesonderte Inbetriebnahmemöglichkeit vorgesehen, welche insbesondere eine Vorabprüfung des Gerätes ermöglichen soll. Unter der Voraussetzung, daß in den ersten Speichermitteln 13 ein Referenzcode noch nicht vorhanden ist, sendet ein fabrikneues Motorsteuergerät 10 hierfür bei seiner erstmaligen Inbetriebnahme zusammen mit dem M-Coderufsignal eine F-Zustandsinformation an das Sicherungssteuergerät 30, mittels derer es jenem anzeigt, daß es sich um ein fabrikneues Motorsteuergerät 10 handelt, in dessen Speichermitteln 13 ein Referenzcode noch nicht abgelegt ist. Das Sicherungssteuergerät 30 erkennt die F-Zustandsinformation und bewirkt, daß das Sicherungssteuergerät 30 dem Motorsteuergerät 10 in Reaktion auf den erhaltenen M-Code ein gesondertes Freigabesignal zurücksendet, das sich aus dem in den Speichermitteln 32 vorhandenen Referenz-M-Code und einem als N-Zustandsinformation bezeichneten Hilfssignal zusammensetzt. Letzteres bewirkt im Motorsteuergerät 10 in Verbindung mit dem Referenz-M-Code eine Freischaltung des Motorsteuergerätes 10, ohne daß in den ersten Speichermitteln 13 ein Referenzcode angelegt wird. Dadurch ist eine schnelle und einfache Erstinbetriebnahme eines Motorsteuergerätes 10 für Prüfzwecke möglich, ohne daß es durch die Prüfung bereits auf einen bestimmten V-Code festgelegt wird.

Eine gesonderte Inbetriebnahme kann in gleicher Weise erfolgen, wenn sowohl Motorsteuergerät 10 wie Sicherungssteuergerät 30 fabrikneu sind. Um einem Nutzer den fabrikneuen Zustand zu verdeutlichen wird sie in diesem Fall sinnvoll jedoch derart modifiziert, daß zur Entriegelung der Wegfahrsperre beziehungsweise für eine Freigabe des Motorsteuergerätes die Durchführung einer zusätzlichen Entrriegelungsmaßnahme erforderlich ist. Eine solche entriegelungserschwerende Zusatzmaßnahme kann beispielsweise darin bestehen, daß der Zündschlüssel innerhalb einer vorgegebenen Zeit in bestimmter Weise mehrfach betätigt wird. Zweckmäßig ist weiterhin der Motorbetrieb im Falle der gesonderten Inbetriebnahme einer hinsichtlich beider Steuergeräte fabrikneuen Wegfahrsperre nur beschränkt möglich, und beispielsweise nach der Drehzahl und/oder der Last begrenzt.

Nach Einbau eines Motorsteuergerätes 10 in ein dafür vorgesehenes Fahrzeug interpretiert das darin angeordnete Sicherungssteuergerät 30 eine F-Zustandsinformation wie eine den Normalbetrieb anzeigende O-Zustandsinformation und sendet dem Motorsteuergerät 10 auch bei Erhalt eines M-Codes zusammen mit einer F-Zustandsinformation einen V-Code als Freigabesignal zurück. Je nach Ausführung der Wegfahrsperre kann es vorgesehen sein, die Herbeiführung der Uminterpretation einer F-Zustandsinformation im Sicherungssteuergerät 30 mittels eines Signales herbeizuführen, welches der zentralen Prozessoreinheit 31 über die externe Schnittstelle 33 durch ein externes Gerät 50 vorgegeben wird.

Vorgesehen sein kann ferner, daß die erstmalige Vorgabe eines V-Codes in die Speichermittel 32 fabrikneuer Sicherungssteuergeräte 30 allgemein mit Hilfe eines externen Gerätes 50 über eine Leitungsverbindung 22 über die externe Schnittstelle 33 erfolgt. Ein externes Gerät 50 in diesem Sinne kann beispielsweise ein Motortestgerät sein.

Um einen rechtmäßigen Nutzer im Falle eines unvorhergesehenen technischen Defektes an einer Komponente der Wegfahrsperre, beispielsweise an der Datenleitung 20 oder am Sicherungssteuergerät 30, dennoch eine Inbetriebnahme des Fahrzeuges zu ermöglichen, ist eine Notentriegelung des Motorsteuergerätes 10 vorgesehen. Sie beruht auf einem in den zweiten Speichermitteln 14 des Motorsteuergerätes 10 abgelegten P-Code. Dabei handelt es sich um einen dem Benutzer bekannten, und zweckmäßig von diesem vorgegebenen, persönlichen Code. Zur Durchführung der Notentriegelung gibt ein berechtigter Benutzer, d.h. zuvor einen korrekten Zugangsberechtigungscode eingegeben hat, dem Motorsteuergerät 10 mittels der Eingabemittel 40 über die Schnittstelle 12 einen mit dem in den Speichermitteln 14 abgelegten Code übereinstimmenden P-Code ein. Für diesen Zweck geeignete Eingabemittel 40 können beispielsweise das Gaspedal sein, das mit einer periodisch blinkenden Fehlerlampe verbunden ist. Durch auf die Zahl der Blinkimpulse abgestimmtes Betätigen des Gaspedals erfolgt die Codeeingabe.

Der P-Code ist grundsätzlich von einem autorisierten Benutzer änderbar. In fabrikneuen Motorsteuergeräten 10 ist in den zweiten Speichermitteln 14 ein in der Regel einfacher P-Code vorbelegt, welcher dem Besitzer mitgeteilt wird. Er kann dann den vorbelegten P-Code durch einen von ihm bestimmten ersetzen. Vorzugsweise geschieht dies auf die gleiche Art wie eine Notentriegelung, d.h. durch auf die Zahl der Blinkimpulse abgestimmtes Betätigen des Gaspedals. Vorgesehen sein kann ferner auch die Möglichkeit, einen P-Code mit Hilfe eines externen Gerätes 50 über das Sicherungssteuergerät 30 zu ändern beziehungsweise einzugeben.

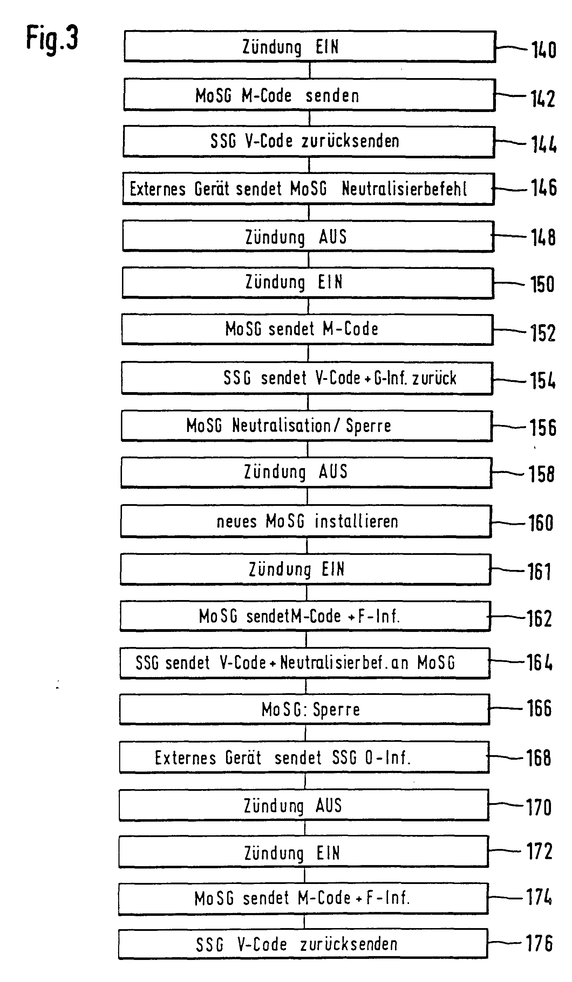

Berechtigten Benutzern ist desweiteren die Möglichkeit gegeben, ein beispielsweise defektes Motorsteuergerät 10 durch ein funktionsfähiges, neues Motorsteuergerät zu ersetzen. Dies geschieht mit Hilfe eines über die Schnittstelle 33 an das Sicherungssteuergerät 30 anzuschließenden externen Gerätes 50. Der Vorgang hierzu ist anhand von Figur 3 beschrieben. Nach Einschalten der Bordspannung, Schritt 140, erfolgt, unter der Voraussetzung, daß die Kommunikation zwischen Motorsteuergerät 10 und Sicherungssteuergerät 30 funktionsfähig ist, zunächst in üblicher Weise eine Freischaltung des Motorsteuergerätes 10 nach vorhergehender Ausführung der Schritte: Senden eines M-Codedes, 142, Zurückerhalten eines V-Codes vom Sicherungssteuergerät 30, 144. Nachfolgend wird dem Sicherungssteuergerät 30 über das externe Gerät 50 ein Neutralisierbefehl zugeführt, den es in den Speichermitteln 32 ablegt, Schritt 146. Es schließt sich ein Aus- und Wiedereinschalten der Bordspannung an, 148, 150. Auf den erneuten Erhalt eines M-Codes vom Motorsteuergerät 10 nach Wiedereinschalten der Bordspannung hin, Schritt 152, sendet das Sicherungssteuergerät 30 nun den V-Code zusammen mit dem in den Speichermitteln abgelegten Neutralisierbefehl an das Motorsteuergerät 10 zurück, 154. Jenes versetzt sich daraufhin in einen neutralisierten Zustand, 156, in dem es einnerseits die ersten Speichermittel 13 zur Übernahme eines neuen V-Codes bereitsetzt, sich gleichzeitig aber sperrt, so daß eine Inbetriebnahme nicht möglich ist. Es folgt ein erneutes Ausschalten der Bordspannung, Schritt 158. Sodann kann das neue Motorsteuergerät 10 installiert werden. Durch abermaliges Einschalten der Bordspannung, Schritt 161, wird es erstmals in Betrieb genommen. Sofern es fabrikneu ist, sendet es zusammen mit dem M-Code zunächst eine seinen fabrikneuen Zustand bezeichnende F-Zustandsinformation an das Sicherungssteuergerät 30, Schritt 162. Das Sicherungssteuergerät 30 antwortet, indem es abermals zusammen mit einem V-Code den in den Speichermitteln 32 des Sicherungssteuergerätes 30 vorhandenen Neutralisierbefehl an das Motorsteuergerät 10 zurücksendet, 164. Jenes bleibt dadurch im fabrikneuen oder neutralisierten Zustand, und verriegelt sich gegen Inbetriebnahme, 166. Gleichzeitig geht das Motorsteuergerät 10 in Bereitschaft zur Aufnahme eines neuen V-Codes über. Sodann wird dem Sicherungssteuergerät 30 mittels des externen Gerätes 50 über die externe Schnittstelle 33 eine den Normalbetrieb bezeichnende O-Information zugeführt, 168, die es in den Speichermitteln 32 ablegt. Der in den Speichermitteln 32 vorhandene Neutralisierbefehl wird dabei gelöscht oder zumindest deaktiviert. Es folgt ein erneutes Aus- und Wiedereinschalten der Bordspannung, Schritte 170, 172. Auf die daraufhin wiederum erfolgende Zusendung eines M-Codes zusammen mit einer F-Information durch das neutralisierte, neue Motorsteuergerät 10 reagiert das Sicherungssteuergerät 30 jetzt durch Zurücksendung eines V-Codes zusammen mit der O-Information. Das Motorsteuergerät 10 geht daraufhin in den Normalbetriebszustand über. Es übernimmt den erhaltenen V-Code als zukünftigen Referenzcode in die ersten Speichermittel 13 und gibt den Motorbetrieb frei.

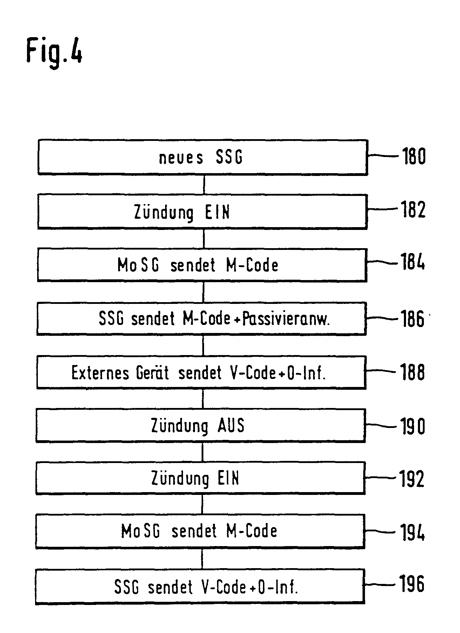

Wie der des Motorsteuergerätes 10 ist, gleichfalls mit Hilfe eines externen Gerätes 50, auch der Austausch des Sicherungssteuergerätes 30 möglich. Der Ablauf einer Austauschdurchführung ist in Figur 4 veranschaulicht. Am Anfang steht in diesem Fall der Einbau eines neuen Sicherungssteuergerätes 30, Schritt 180. Nach Einschalten der Bordspannung, Schritt 182 sendet das Motorsteuergerät 10 in üblicher Weise einen M-Code an das neue Sicherungssteuergerät 30, Schritt 184. In dessen Speichermitteln 32 ist ein V-Code noch nicht vorhanden. Es reagiert auf den Erhalt des M-Codes deshalb durch Zurücksenden eines neutralen Signales, welches sich aus dem in den Speichermitteln 32 vorhandenen Referenz-M-Code sowie einer Passivieranweisung zusammensetzt, Schritt 186. Es bewirkt, daß sich das Motorsteuergerät 10 verriegelt und nicht auf den in den Speichermitteln 14 vorhandenen Referenzcode zugreift. Hieran anschließend erhält das neue Sicherungssteuergerät 30 über die externe Schnittstelle 33 von dem externen Gerät 50 den gültigen V-Code, 188, der im Motorsteuergerät 10 als Referenzcode vorhanden ist. Voraussetzung dabei ist, daß der V-Code außerhalb des Fahrzeuges verfügbar ist. Eine Möglichkeit hierfür besteht darin, den V-Code als digitale Information auf einer magnetisch codierten Codekarte 60 abzulegen. Zusammen mit dem V-Code erhält das Sicherungssteuergerät 30 eine den Normalbetrieb anzeigende O-Zustandsinformation. Auf erneuten Eingang eines M-Codes vom Motorsteuergerät 10 hin nach zwischengeschaltetem Aus- und Wiedereinschalten der Bordspannung, Schritte 190, 192, 194 sendet das Sicherungssteuergerät 30 dem Motorsteuergerät 10 dann den vom externen Gerät erhaltenen V-Code zusammen mit der O-Zustandsinformation zurück. Das Motorsteuergerät 10 versetzt sich daraufhin in den Normalbetriebszustand und gibt den Motorbetrieb frei.

Die vorstehend beschriebene Wegfahrsperre ist unter Beibehaltung des grundlegenden Konzeptes in weitem Rahmen variierbar. Insbesondere gilt dies für die Ausgestaltung der Signalverarbeitung in Sicherungs- und Motorsteuergerät. Auch kann beispielsweise die verschlüsselte Hinterlegung des Freigabesignals in Form des V-Codes anders als auf einer magnetischen Codekarte erfolgen.

## Patentansprüche

1. Wegfahrsperre mit einem Motorsteuergerät (10) und damit zusammenwirkenden Eingabemitteln (40) zur Eingabe eines Zugangsberechtigungscodes, die nur betriebsbereit ist, wenn das Motorsteuergerät (10) einen den Benutzer legitimierenden Zugangsberechtigungscode erhalten hat, wobei
- das Motorsteuergerät (10) über eine Signalleitung (20) mit einem Sicherungssteuergerät (30) verbunden ist,
- das Motorsteuergerät (10) über Mittel verfügt zur Abgabe eines vorbestimmten Rufsignals (M-Code) auf die Signalleitung (20), um vom Sicherungssteuergerät (30) die Zusendung eines Freigabecodes (V-Code) anzufordern,
- das Sicherungssteuergerät (30) über Mittel (31, 32) verfügt zum Vergleich eines vom Motorsteuergerät (10) erhaltenen codierten Rufsignals (M-Code) mit einem im Sicherungssteuergerät (30) vorhandenen Referenzsignal sowie zur Abgabe des Freigabecodes (V-Code) an das Motorsteuergerät (10) bei Übereinstimmung,
- das Motorsteuergerät (10) Speichermittel (13) besitzt, in die es einen Freigabecode (V-Code) als Referenzcode einschreiben kann,
- und das Motorsteuergerät (10) weiterhin eine Prüfeinrichtung (15) aufweist, die bei Erhalt eines Freigabecodes (V-Code) prüft, ob in den Speichermitteln (13) ein Referenzcode vorhanden ist, und die den Freigabecode (V-Code) als Referenzcode in die Speichermittel (13) übernimmt, wenn darin ein Referenzcode nicht vorhanden ist.

2. Anordnung nach Anspruch 1, **dadurch gekennzeichnet, daß** sich das Motorsteuergerät (10) betriebsbereit setzt, wenn in den Speichermitteln (14) ein gültiger Referenzcode vorhanden ist und der Freigabecode (V-Code) damit übereinstimmt.

3. Anordnung nach Anspruch 1, **dadurch gekennzeichnet, daß** das Motorsteuergerät (10) Mittel (15) aufweist, um über die Signalleitung (20) ein Zustandssignal auszugeben, welches anzeigt, ob in den Speichermitteln (14) ein Referenzcode vorhanden ist.

4. Anordnung nach Anspruch 3, **dadurch gekennzeichnet, daß** die Mittel (15) zusammen mit einem Rufsignal (M-Code) ein einen Normalbetrieb anzeigendes Zustandssignal ausgeben, wenn in den Speichermitteln (14) ein Referenzcode vorhanden ist, und ein einen fabrikneuen Zustand anzeigendes Zustandssignal, wenn in den Speichermitteln (14) kein Referenzcode vorhanden ist.

5. Anordnung nach Anspruch 1, **dadurch gekennzeichnet, daß** das Motorsteuergerät (10) zweite Speichermittel (13) aufweist, in denen ein personenspezifischer Referenzcode abgelegt ist.

6. Anordnung nach Anspruch 1, **dadurch gekennzeichnet, daß** das Motorsteuergerät (10) über eine Eingabesignalverbindung (12, 21) mit von einem Benutzer betätigbaren Eingabemitteln (40) zur Eingabe eines personenspezifischen Codes verbunden ist.

7. Anordnung nach Anspruch 1, **dadurch gekennzeichnet, daß** sich das Motorsteuergerät (10) betriebsbereit setzt, wenn ein über die Eingabesignalverbindung (12, 21) zugeführter personenspezifischer Code mit dem in den Speichermitteln (13) abgelegten Code übereinstimmt.

8. Anordnung nach Anspruch 1, **dadurch gekennzeichnet, daß** das Sicherungssteuergerät (30) aufweist:
Speichermittel (32) zur Ablage eines Freigabecodes (V-Code), sowie eine zentrale Prozessoreinheit (31), welche den Freigabecode (V-Code) bei Erhalt eines Rufsignales (M-Code) ausliest und dem Motorsteuergerät (10) zuführt.

9. Anordnung nach Anspruch 8, **dadurch gekennzeichnet, daß** die zentrale Prozessoreinheit (31) dem Motorsteuergerät (10) nach Erhalt eines Rufsignales (M-Code) ein neutrales, nicht zu dessen Freigabe führendes Signal zurücksendet, wenn in den Speichermitteln (32) ein Freigabecode (V-Code) nicht vorhanden ist.

10. Anordnung nach Anspruch 8, **dadurch gekennzeichnet, daß** wenn in den Speichermitteln (32) ein Freigabecode (V-Code) nicht vorhanden ist, und vom Motorsteuergerät (10) zusammen mit einem Rufsignal (M-Code) ein einen fabrikneuen Zustand anzeigendes Zustandssignal übertragen wurde, das Motorsteuergerät (10) nur nach Durchführung wenigstens einer entriegelungserschwerenden Maßnahme betriebsbereit setzbar ist.

11. Anordnung nach Anspruch 10, **dadurch gekennzeichnet, daß** die entriegelungserschwerende Maßnahme mehrmaliges Betätigen des Zündschlüssels innerhalb einer vorbestimmten Zeit vorsieht.

12. Anordnung nach Anspruch 1, **dadurch gekennzeichnet, daß** dem Sicherungssteuergerät (30) eine Schnittstelle (33) zum Herstellen einer Signalverbindung mit einem externen Gerät (50) zugeordnet ist, welches Mittel (15) zur Übertragung eines Freigabecodes (V-Code) an das Sicherungssteuergerät (30) aufweist.

13. Anordnung nach Anspruch 1, **dadurch gekennzeichnet, daß** dem Motorsteuergerät (10) eine Schnittstelle (12) zum Herstellen einer Signalverbindung mit einem externen Gerät (40) zugeordnet ist, welches Mittel zur Übertragung eines Freigabecodes (V-Code) an das Motorsteuergerät (10) aufweist.

14. Anordnung nach Anspruch 1, **dadurch gekennzeichnet, daß** die Eingabe eines Freigabecodes (V-Code) oder eines personenspezifischen Codes über ein externes Gerät (40, 50) nur nach vorhergehender Eingabe eines Zugangsberechtigungscodes möglich ist.

15. Anordnung nach Anspruch 1, **dadurch gekennzeichnet, daß** das Freigabesignal (V-Code) fahrzeugspezifisch ist.

16. Anordnung nach Anspruch 1, **dadurch gekennzeichnet, daß** das Rufsignal (M-Code) produktspezifisch ist.

## Claims

1. Immobilizer having an engine control unit (10) and input means (40) which interact therewith for the purpose of inputting an access authorization code, which means are ready for operation only if the engine control unit (10) has received an access authorization code authorizing the user,
- the engine control unit (10) being connected to a security control unit (30) via a signal line (20),
- the engine control unit (10) having means for outputting a predefined call signal (M code) onto the signal line (20) in order to request the security control unit (30) to transmit an enable code (V code),
- the security control unit (30) having means (31, 32) for comparing an encoded call signal (M code) received from the engine control unit (10) with a reference signal present in the security control unit (30) and for outputting the enable code (V code) to the engine control unit (10) when there is correspondence,
- the engine control unit (10) having storage means (13) into which it can write an enable code (V code) as reference code,
- and the engine control unit (10) also having a test device (15) which, when an enable code (V code) is received, tests whether a reference code is present in the storage means (13) and which transfers the enable code (V code) as reference code into the storage means (13) if a reference code is not present therein.

2. Arrangement according to Claim 1, **characterized in that** the engine control unit (10) becomes ready for operation if a valid reference code is present in the storage means (13) and the enable code (V code) corresponds thereto.

3. Arrangement according to Claim 1, **characterized in that** the engine control unit (10) has means (15) for outputting, via the signal line (20), a status signal which indicates whether a reference code is present in the storage means (13).

4. Arrangement according to Claim 3, **characterized in that** the means (15) output, together with a call signal (M code), a status signal which indicates normal operation if a reference code is present in the storage means (13), and output a status signal which indicates a factory-new status if there is no reference code present in the storage means (13).

5. Arrangement according to Claim 1, **characterized in that** the engine control unit (10) has second storage means (13) in which a person-specific reference code is stored.

6. Arrangement according to Claim 1, **characterized in that** the engine control unit (10) is connected via an input signal connection (12, 21) to input means (40), which can be activated by a user, for the purpose of inputting a person-specific code.

7. Arrangement according to Claim 1, **characterized in that** the engine control unit (10) becomes ready for operation if a person-specific code which is supplied via the input signal connection (12, 21) corresponds to the code stored in the storage means (13).

8. Arrangement according to Claim 1, **characterized in that** the security control unit (30) has:
storage means (32) for storing an enable code (V code), and a central processor unit (31) which reads out the enable code (V code) when a call signal (M code) is received and supplies said enable code (V code) to the engine control unit (10).

9. Arrangement according to Claim 8, **characterized in that**, after a call signal (M code) is received, the central processor unit (31) transmits back to the engine control unit (10) a neutral signal which does not cause it to be enabled if there is no enable code (V code) in the storage means (32).

10. Arrangement according to Claim 8, **characterized in that** if there is no enable code (V code) present in the storage means (32) and a status signal indicating a factory-new status has been transmitted by the engine control unit (10) together with a call signal (M code), the engine control unit (10) can be placed in a ready to operate state only after at least one measure which impairs release has been implemented.

11. Arrangement according to Claim 10, **characterized in that** the measure which impairs release provides for repeated activation of the ignition key within a predefined time.

12. Arrangement according to Claim 1, **characterized in that** the security control unit (30) is assigned an interface (33) for setting up a signal connection to an external device (50) which has means (15) for transmitting an enable code (V code) to the security control unit (30).

13. Arrangement according to Claim 1, **characterized in that** the engine control unit (10) is assigned an interface (12) for setting up a signal connection to an external device (40) which has means for transmitting an enable code (V code) to the engine control unit (10).

14. Arrangement according to Claim 1, **characterized in that** the inputting of an enable code (V code) or of a person-specific code via an external device (40, 50) is possible only after an access authorization code has previously been input.

15. Arrangement according to Claim 1, **characterized in that** the enable signal (V code) is vehicle-specific.

16. Arrangement according to Claim 1, **characterized in that** the call signal (M code) is product-specific.

## Revendications

1. Dispositif antivol comprenant un appareil de commande de moteur (10) et des moyens d'entrée (40) coopérant avec celui-ci pour entrer un code d'autorisation d'accès qui ne permet le fonctionnement que si l'appareil de commande de moteur (10) contient un code d'autorisation d'accès légitimant l'utilisateur, dans lequel :
- l'appareil de commande de moteur (10) est relié par une ligne de transmission de signaux (20) à un appareil de commande de sécurité (30),
- l'appareil de commande de moteur (10) dispose de moyens pour émettre un signal d'appel prédéterminé (code M) par la ligne de transmission de signaux (20) pour demander à l'appareil de commande de sécurité (30), l'envoi d'un code de libération (code V),
- l'appareil de commande de sécurité (30) dispose de moyens (31, 32) pour comparer un signal d'appel codé (code M) reçu de l'appareil de commande de moteur (10) à un signal de référence contenu dans l'appareil de commande de sécurité (30) et pour envoyer le code de libération (code V) à l'appareil de commande de moteur (10) en cas de concordance des codes,
- l'appareil de commande de moteur (10) comporte une mémoire (13) dans laquelle on peut inscrire comme code de référence, un code de libération (code V), et
- l'appareil de commande de moteur (10) comporte en outre une installation de contrôle (15) qui, à la réception d'un code de libération (code V) vérifie si un code de référence est contenu dans la mémoire (13), et qui reprend le code de libération (code V) comme code de référence dans la mémoire (13) s'il n'y a pas de code de référence.

2. Dispositif selon la revendication 1,
**caractérisé en ce que**
l'appareil de commande de moteur (10) se met à l'état prêt à fonctionner si la mémoire (14) contient un code de référence valable et si le code de libération (code V) concorde.

3. Dispositif selon la revendication 1,
**caractérisé en ce que**
l'appareil de commande de moteur (10) comporte des moyens (15) pour émettre un signal d'état par la ligne de transmission de signaux (20), ce signal indiquant si un code de référence existe dans la mémoire (14).

4. Dispositif selon la revendication 3,
**caractérisé en ce que**
les moyens (15) envoient en même temps qu'un signal d'appel (code M) un signal d'état indiquant le fonctionnement normal si un code de référence existe dans la mémoire (14), et un signal d'état indiquant l'état de produit sortant de fabrication si dans la mémoire (14), il n'y a pas de code de référence.

5. Dispositif selon la revendication 1,
**caractérisé en ce que**
l'appareil de commande de moteur (10) comporte une seconde mémoire (13) contenant un code de référence spécifique à la personne.

6. Dispositif selon la revendication 1,
**caractérisé en ce que**
l'appareil de commande de moteur (10) est relié par une ligne de signaux d'entrée (12, 21) à des moyens d'entrée (40) que peut actionner l'utilisateur pour introduire un code spécifique de personne.

7. Dispositif selon la revendication 1,
**caractérisé en ce que**
l'appareil de commande de moteur (10) se met à l'état prêt à fonctionner si un code spécifique à la personne fourni par la liaison de signal d'entrée (12, 21) correspond au code enregistré dans la mémoire (13).

8. Dispositif selon la revendication 1,
**caractérisé en ce que**
l'appareil de commande de sécurité (30) comprend :
une mémoire (32) pour contenir un code de libération (code V) ainsi qu'une unité centrale de traitement (31) qui extrait le code de libération (code V) à la réception d'un signal d'appel (code M) et l'envoie à l'appareil de commande de moteur (10).

9. Dispositif selon la revendication 8,
**caractérisé en ce que**
l'unité centrale de traitement (31) renvoie à l'appareil de commande de moteur (10) après réception d'un signal d'appel (code M), un signal neutre n'entraînant pas sa libération si la mémoire (32) ne contient pas de code de libération (code V).

10. Dispositif selon la revendication 8,
**caractérisé en ce que**
si la mémoire (32) ne contient pas de code de libération (code V) et si l'appareil de commande de moteur (10) a transmis avec un signal d'appel (code M) un signal d'état indiquant un état neuf de fabrication, l'appareil de commande de moteur (10) se met dans un état prêt à fonctionner seulement après l'exécution d'au moins une mesure rendant plus difficile le déverrouillage.

11. Dispositif selon la revendication 10,
**caractérisé en ce que**
la mesure rendant plus difficile le déverrouillage consiste à actionner plusieurs fois la clé de contact dans une période donnée.

12. Dispositif selon la revendication 1,
**caractérisé en ce que**
l'appareil de commande de sécurité (30) comporte une interface (33) pour établir une liaison de signal avec un appareil externe (50) qui est muni du moyen (15) pour transmettre un code de libération (code V) à l'appareil de commande de sécurité (30).

13. Dispositif selon la revendication 1,
**caractérisé en ce que**
l'appareil de commande de moteur (10) comporte une interface (12) pour établir une liaison de transmission de signaux avec un appareil externe (40) ayant des moyens pour transmettre un code de libération (code V) à l'appareil de commande de moteur (10).

14. Dispositif selon la revendication 1,
**caractérisé en ce que**
l'entrée d'un code de libération (code V) ou d'un code spécifique à une personne n'est possible que par un appareil externe (40, 50) seulement après introduction préalable d'un code d'autorisation d'accès.

15. Dispositif selon la revendication 1,
**caractérisé en ce que**
le signal de libération (code V) est spécifique au véhicule.

16. Dispositif selon la revendication 1,
**caractérisé en ce que**
le signal d'appel (code M) est spécifique au produit.
